# FASCICULE DE BREVET EUROPEEN

(11) **EP 1 062 479 B1**
(45) Date de publication et mention de la délivrance du brevet: **25.06.2003**
(21) Numéro de dépôt: 99907680.5
(22) Date de dépôt: 11.03.1999
(51) Int. Cl.: G01C 9/10, G01C 9/06, B25H 1/00, A01G 3/053, B25F 5/02

(54) **DISPOSITIF INDICATEUR DE POSITION POUR APPAREIL PORTABLE A USAGE DOMESTIQUE**
POSITIONSANZEIGEVORRICHTUNG FÜR TRAGBARES HAUSHALTSGERÄT
POSITION INDICATING DEVICE FOR PORTABLE HOUSEHOLD APPLIANCE

(30) Priorité: 11.03.1998 FR 9803212
(43) Date de publication de la demande: 27.12.2000
(73) Titulaire: Batrel, Claude André François, 69730 Genay (FR); Becker, Christian Guy Louis, 69340 Francheville (FR)
(72) Inventeur: Batrel, Claude André François, 69730 Genay (FR); Becker, Christian Guy Louis, 69340 Francheville (FR)
(74) Mandataire: Martin, Didier
(86) Numéro de dépôt international: FR9900537
(87) Numéro de publication internationale: WO99046560

(56) Documents cités:
- FR-A- 520 551
- FR-A- 982 948
- US-A- 4 073 062
- US-A- 5 467 532

## Description

### DOMAINE TECHNIQUE DE L'INVENTION

La présente invention se rapporte au domaine technique des dispositifs indicateurs de position pour appareil portable à usage domestique, tel que des perceuses ou taille-haies, ces dispositifs étant aptes à être fixés et rendus solidaires de l'appareil, par exemple de manière amovible, pour permettre d'indiquer la position de l'appareil par rapport à une position de consigne afin de corriger éventuellement la position de l'appareil.

La présente invention concerne un dispositif indicateur de position par rapport à une position de consigne, pour appareil portable à usage domestique, ledit dispositif étant apte à être fixé et rendu solidaire de l'appareil.

L'invention concerne également un appareil portable à usage domestique équipé d'un tel dispositif, l'invention concernant, de manière préférentielle, une perceuse, ou un taille-haie.

### TECHNIQUE ANTERIEURE

Il est déjà connu d'équiper les indicateurs de niveau, utilisés par exemple en maçonnerie, avec des dispositifs indicateurs de niveau à bulle pour donner une information visuelle représentative de l'horizontalité d'une surface. De tels dispositifs peuvent également être associés à un second indicateur de niveau positionné à 90° par rapport au premier indicateur afin de donner une autre information visuelle susceptible d'indiquer le niveau de verticalité de la surface.

Il a également été envisagé d'associer de tels dispositifs avec une interface de montage rotative intégrée dans le cadre de l'indicateur de niveau. Cette amélioration permet à l'utilisateur de disposer d'un outil lui permettant de déterminer de manière virtuelle, une position de consigne représentative d'une valeur angulaire quelconque relativement à la surface de travail de l'indicateur de niveau qui se trouve être à la surface de travail. Un tel outil est utilisé dans le domaine de la construction, et en particulier en maçonnerie.

Dans le domaine spécifique de l'invention, à savoir dans le domaine des taille-haies ou des perceuses, il est habituel pour l'utilisateur de se fier à sa seule appréciation visuelle pour utiliser l'appareil. Ainsi, l'utilisateur d'un taille-haie ne dispose d'aucun élément mécanique susceptible de lui indiquer, de manière fiable et indépendante, des références angulaires quelconques, verticales, horizontales, ou autres, lui permettant d'assurer la coupe régulière d'un arbuste ou d'une haie. Dans la pratique, la taille d'une haie s'effectue à l'aide de la simple appréciation visuelle de l'utilisateur, ce qui bien évidemment se traduit généralement par une coupe irrégulière, à la fois au niveau de la coupe horizontale, ainsi qu'au niveau de la coupe verticale. Par ailleurs, il est bien connu que la coupe d'une haie doit, pour favoriser la croissance des végétaux, s'effectuer non pas selon un plan vertical, mais aussi selon une inclinaison angulaire, de préférence régulière, permettant d'obtenir une haie dont la base est plus large que sa partie supérieure. Dans certaines applications particulières, il est connu d'avoir recours à un simple fil tendu horizontalement pour servir de guide dans le cas d'une coupe de haie selon une ligne horizontale. Une telle solution est bien évidemment peu pratique et assez contraignante.

FR-A-520 551 décrit un dispositif indicateur de position d'un appareil portable par rapport à une position de consigne. Ce dispositif comporte un logement fermé avec une petite quantité de mercure qui se déplace librement sous l'effet de la gravité en fonction de la position du dispositif entre les positions de butée du logement, où le mercure ferme un circuit électrique, qui fait allumer une ampoule d'un moyen d'information. US-A-4 073 062 décrit un niveau à bulle d'air, dont le logement avec la bulle d'air est monté mobile en rotation pour fixer une position de consigne.

US-A-5 467 532 décrit un niveau à bulle d'air apte à être fixé sur une taille-haie. Un cercle qui indique la position de consigne peut être positionné à un angle désiré sur le logement avec la bulle d'air.

### EXPOSE DE L'INVENTION

Les objets assignés à l'invention visent en conséquence à porter remède aux divers inconvénients énumérés précédemment et à proposer un nouveau dispositif indicateur de position spécifiquement adapté à tout appareil portable à usage domestique, et en particulier aux taille-haies, et permettant de fournir à l'utilisateur, de manière continue, une information de position de l'appareil par rapport à une position de consigne.

Un autre objet de l'invention vise à proposer un dispositif indicateur de position permettant à l'utilisateur de régler lui-même, et de manière simple, la position de consigne souhaitée.

Un autre objet de l'invention vise à proposer un dispositif indicateur de position permettant, à l'aide de moyens simples et fiables, de déterminer et fixer des positions de consignes selon plusieurs directions de l'espace.

Un autre objet de l'invention vise à proposer un dispositif indicateur de position susceptible de fournir à l'utilisateur des éléments d'informations visuelles de position aisément traduisibles en éléments de correction de position de l'appareil.

Les objectifs assignés à l'invention sont atteints à l'aide d'un dispositif indicateur de position par rapport à une position de consigne pour appareil portable à usage domestique, ledit dispositif étant apte à être fixé et rendu solidaire de l'appareil, ledit dispositif comprenant un boîtier avec:
- un moyen d'information de la position instantanée de l'appareil susceptible d'émettre des signaux représentatifs de la position instantanée de l'appareil par rapport à la position de consigne,
- un moyen de détermination de la position instantanée de l'appareil relié fonctionnellement au moyen d'information et comportant au moins un logement fermé incluant un élément interne susceptible de se déplacer librement dans le logement, sous l'effet de la gravité et en fonction de la position instantanée de l'appareil, entre des positions de butée dans lesquelles l'élément interne ferme un circuit électrique déclenchant, par l'intermédiaire du moyen d'information un signal représentatif de la position instantanée de l'appareil, caractérisé en ce que ledit logement est monté avec une possibilité de réglage de sa position de manière à permettre de fixer une position de consigne dans laquelle l'élément interne est dans une position stable hors des positions de butées.

### DESCRIPTIF SOMMAIRE DES FIGURES

Les avantages et détails de l'invention seront explicités en détail dans la description qui suit à l'aide des dessins annexés ci-après, donnés à titre purement illustratif et non limitatif, dans lesquels :
- la figure 1 illustre une vue schématique générale du dispositif indicateur de position conforme à l'invention.
- la figure 2 illustre, selon une coupe transversale longitudinale partielle, un dispositif indicateur de position conforme à l'invention, spécialement adapté pour être monté et utilisé sur un taille-haie.
- la figure 3 illustre, selon une vue en perspective, un détail de réalisation du système de réglage de la position de consigne d'un dispositif conforme à l'invention.
- la figure 4 illustre, selon une vue en coupe transversale le long de la ligne IV-IV de la figure 3, un détail de réalisation du système de réglage de la position de consigne conforme à l'invention.

### MEILLEURE MANIERE DE REALISER L'INVENTION

Dans la description qui suit, il sera plus particulièrement fait référence, en tant qu'application préférentielle, à un taille-haie équipé du dispositif indicateur de position conforme à l'invention. Bien qu'une telle application soit préférentielle, il convient d'admettre que la présente invention n'est pas limitée à une telle application, mais qu'elle vise au contraire à pouvoir s'appliquer à tout appareil portable à usage domestique, incluant non seulement les taille-haies, mais encore des appareils du type perceuses ou autres pour lesquels il convient de maintenir pendant le travail une position de consigne sensiblement constante.

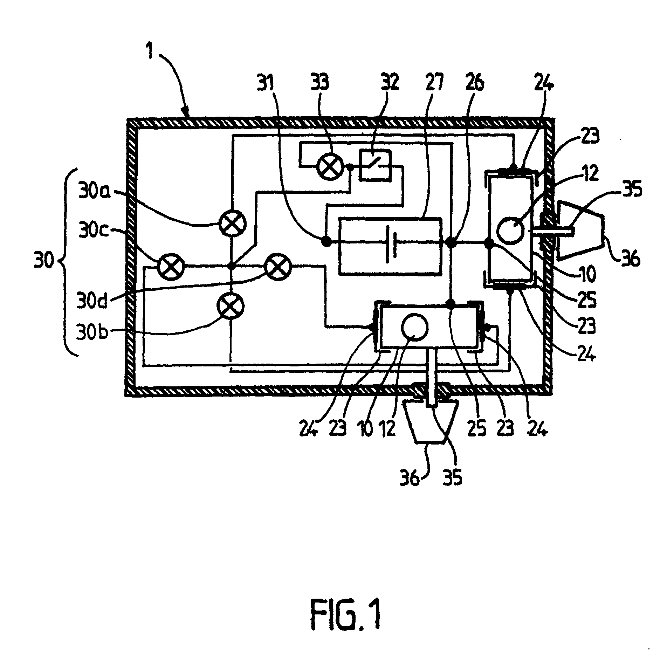

Les figures 1 à 4 montrent un dispositif indicateur de position par rapport à une position de consigne pour appareil portable à usage domestique.

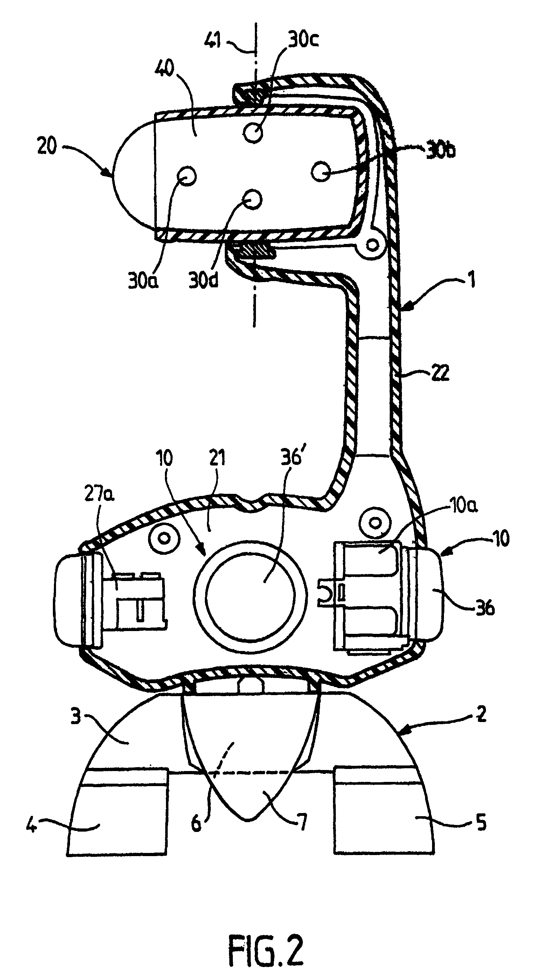

Un tel dispositif est apte à être fixé sur et rendu solidaire d'un appareil portable (non représenté aux figures), par exemple de manière amovible. A cet effet, le dispositif comprend un boîtier 1 réalisé par exemple en matériau plastique, destiné à être rendu solidaire, de manière amovible, d'un moyen de fixation 2 fixé sur l'appareil. Tel que montré à la figure 2, le moyen de fixation 2 peut être formé par un support 3 en U comportant deux branches inférieures 4, 5 fixées sur le corps de l'appareil portable, par tous moyens appropriés, et par exemple par vissage, à un emplacement situé dans le champ visuel de travail de l'utilisateur.

Avantageusement, le support 3 comporte une cavité supérieure 6 formée par une ouverture traversante permettant d'y insérer de manière amovible un ergot 7 issu du boîtier 1 et faisant saillie à sa partie inférieure.

Tel que montré aux figures 1 à 4, le boîtier 1 comprend un moyen de détermination de la position instantanée de l'appareil comportant au moins un logement 10 fermé, incluant un élément interne 12 susceptible de se déplacer librement dans le logement, sous l'effet de la gravité et en fonction de la position instantanée de l'appareil. L'élément interne 12 se déplace ainsi dans le logement 10 entre des positions de butée dans lesquelles il ferme un circuit électrique déclenchant un signal représentatif de la position instantanée de l'appareil.

Le boîtier conforme à l'invention comporte également un moyen d'information 20 (figure 2) de la position instantanée de l'appareil susceptible d'émettre des signaux représentatifs de la position instantanée de l'appareil par rapport à la position de consigne donnée. Selon l'invention, le moyen de détermination de la position instantanée de l'appareil est relié fonctionnellement au moyen d'information 20 par l'intermédiaire du circuit électrique relié à chaque position de butée précédemment définie.

Dans son application particulière au taille-haie, tel qu'illustré en particulier à la figure 2, le boîtier 1 comporte une partie inférieure 21 formant réceptacle dans lequel sont logés le moyen de détermination de la position instantanée de l'appareil ainsi qu'au moins une partie du circuit électrique. La partie inférieure 21 est surmontée par un bras sensiblement vertical 22 au sommet duquel est monté le moyen d'information 20.

Tel que montré aux figures 1 à 4, le logement fermé 10 est avantageusement formé par un tube fermé 10a à ses extrémités, réalisé de préférence en un matériau conducteur électrique, chaque tube 10a comportant, en tant qu'élément interne mobile 12, une bille 12a réalisée en métal conducteur électrique.

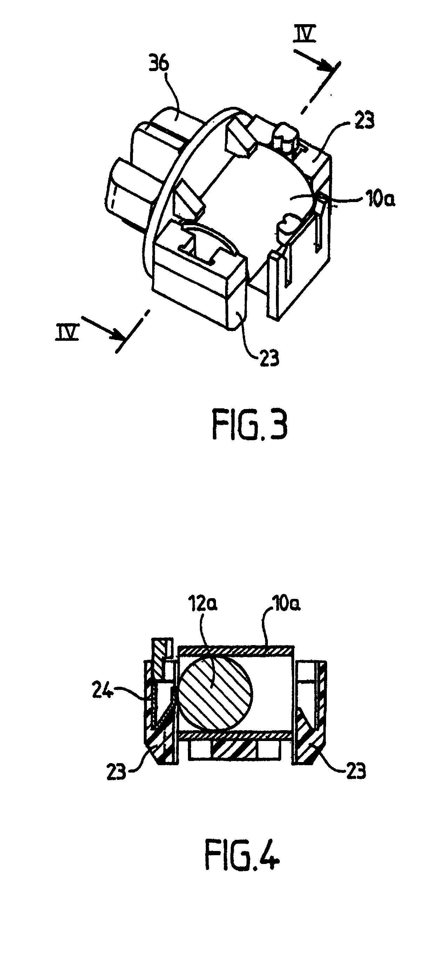

Chaque tube 10a est fermé à ses extrémités par deux bouchons isolants 23, par exemple en matériau plastique délimitant les positions de butée. Au sein des bouchons isolants 23 est montée une pastille conductrice 24, par exemple en cuivre. Avantageusement, chaque pastille conductrice 24 est d'un diamètre inférieur au diamètre interne du tube 10a. Grâce à ce montage, lorsque la bille 12a se trouve dans l'une de ses positions de butée, tel qu'illustré à la figure 4 par exemple, elle est susceptible de fermer le circuit électrique du dispositif associé à chaque pastille conductrice 24.

Un exemple de l'ensemble du circuit électrique du dispositif conforme à l'invention est illustré à la figure 1. Un tel circuit comprend, pour chaque tube 10a, par exemple une masse 25 qui est reliée par soudure et à l'aide d'un fil électrique au pôle négatif 26 d'une pile électrique 27. Chaque pastille conductrice 24 est reliée à la borne d'un élément spécifique du moyen d'information 20 susceptible de fournir un signal représentatif de la position instantanée de l'appareil par rapport à la position de consigne. Selon une version préférentielle de l'invention, l'élément 30 susceptible d'émettre des signaux représentatifs de la position instantanée de l'appareil est formé par des voyants lumineux. L'autre borne de chaque voyant lumineux est reliée au pôle positif 31 de la pile électrique 27 à travers un interrupteur général 32 et son voyant témoin 33.

Grâce à ce montage, chaque position de butée de la bille 12a ferme un circuit électrique associé à chaque position de butée déclenchant, par l'intermédiaire des éléments d'information 30, un signal représentatif de la position instantanée de l'appareil.

Selon une caractéristique importante de l'invention, le logement 10a est monté avec une possibilité de réglage de sa position relative dans l'espace relativement à la position fixe du boîtier 1 de manière à permettre de déterminer et fixer la position de consigne souhaitée de l'appareil et correspondant à une position momentanément stable de la bille 12a hors de ses deux positions de butée.

Selon une version préférentielle de l'invention, le logement 10a est monté mobile en rotation dans le boîtier 1 par l'intermédiaire d'un axe 35 perpendiculaire à l'axe de symétrie longitudinal du tube 10. Un tel montage permet en conséquence le réglage de la position angulaire du moyen de détermination de la position instantanée de l'appareil pour déterminer et fixer ainsi la position de consigne souhaitée de l'appareil.

Le réglage de la position angulaire du tube 10a s'effectue par un organe de commande 36 se présentant par exemple sous la forme d'un bouton de commande monté dans la partie inférieure 21 et accessible à l'utilisateur par l'extérieur du boîtier 1.

Selon une variante de réalisation particulièrement intéressante, le dispositif conforme à l'invention comprend deux logements 10a, indépendants entre eux, montés chacun mobile en rotation autour d'un axe 35, les deux axes étant orthogonaux entre eux de manière à déterminer et fixer ainsi une position de consigne souhaitée de l'appareil dans les trois dimensions de l'espace.

Selon cette variante préférentielle, chaque tube 10a est relié à deux voyants lumineux formant une paire, respectivement 30a, 30b et 30c, 30d, susceptibles de générer quatre signaux visuels représentatifs d'une position de l'appareil portable s'écartant de la position de consigne, soit vers la gauche ou vers la droite, soit vers l'avant ou vers l'arrière. Un tel écart correspond dans chaque tube 10a à un déplacement de la bille 12a vers l'une ou l'autre de ses positions de butée.

Tel que cela est représenté à la figure 2, le moyen d'information 20 est, selon une variante préférentielle de l'invention, formé par un moyen d'information visuel 20 susceptible de fournir des signaux lumineux. Selon la variante représentée à la figure 2, le moyen d'information 20 est formé par un écran 40 pourvu d'une première face dans laquelle est intégrée une série de voyants lumineux, en l'occurrence quatre, respectivement 30a, 30b et 30c, 30d. Chaque voyant 30 est ainsi relié électriquement au circuit électrique associé à chaque position de butée spécifique pour servir de signal lumineux représentatif d'une déviation de position de l'appareil lorsque le circuit électrique correspondant est fermé.

Dans l'application aux taille-haies, la pile 27 est avantageusement formée par un bouton pile 27a (figure 2).

Dans le cadre d'une version simplifiée du dispositif conforme à l'invention, l'écran 40 peut n'être pourvu que d'une seule paire de voyants lumineux 30 dans le cas où le dispositif ne comporte qu'un seul logement 10.

Selon une autre variante de réalisation conforme à l'invention, l'écran 40 peut être pourvu d'une seconde face (non représentée aux figures) opposée à la première face. Selon cette variante, la seconde face est équipée d'une seule paire de voyants 30, chaque paire étant associée, comme dans les variantes précédentes, à un logement 10 de manière à fournir une information de déviation par rapport à une seule position de consigne. Selon cette variante de réalisation, le dispositif conforme à l'invention est néanmoins pourvu de deux logements 10, la seconde face n'étant susceptible de ne fournir qu'une information visuelle relative à un seul logement 10. Cette disposition est particulièrement utile pour assurer le guidage d'un taille-haie lors d'une coupe dans un plan vertical ou incliné. Lors d'une telle opération de coupe, l'utilisateur n'a besoin que d'une information visuelle limitée et réduite à deux directions opposées de l'espace.

Selon cette variante de réalisation, le moyen d'information 20 est monté sur la partie supérieure du bras 22 par l'intermédiaire d'un dispositif à rotation, le long d'un axe 41 de manière à ramener dans le champ visuel de l'utilisateur, l'une ou l'autre des faces de l'écran 40.

Le fonctionnement du dispositif conforme à l'invention est le suivant.

Dans son application préférentielle à un taille-haie, l'utilisateur détermine tout d'abord la ou les positions de consigne souhaitées en positionnant chaque tube 10a dans la position de consigne souhaitée. Pour la taille d'une haie selon un plan rigoureusement horizontal, l'utilisateur va donc positionner successivement chacun des tubes 10a dans un plan horizontal de telle manière que chaque bille 12a soit sensiblement centrée dans chacun des tubes 10a, le taille-haie étant au repos en position horizontale. Pour cela, il actionne chaque bouton 36 pour qu'aucun voyant 30 ne soit allumé, ce qui correspond sensiblement à une position centrale de chaque bille 12a dans le tube 10a. L'opération de coupe peut alors commencer. Lorsque l'utilisateur dévie du plan horizontal formant la position de consigne, l'une ou l'autre des billes 12a va alors venir dans l'une des quatre positions de butée possibles dans chaque tube 10a, ce qui va générer la fermeture du circuit électrique correspondant à l'un des quatre voyants lumineux 30 indiquant que le taille-haie est trop incliné soit vers la gauche, soit vers la droite, soit vers l'avant, soit vers l'arrière. Le voyant correspondant à la déviation par rapport à la valeur de consigne étant allumé, l'opérateur peut alors corriger dans le sens inverse la position du taille-haie jusqu'à ce que le voyant préalablement allumé, soit éteint. On obtient ainsi une taille rigoureusement horizontale de la haie.

Bien évidemment, si l'utilisateur souhaite tailler la haie selon une autre inclinaison, il est nécessaire de régler au préalable chaque tube 10a dans la position de consigne souhaitée correspondant à l'extinction des quatre voyants lumineux 30a, 30b, 30c, 30d, le taille-haie étant au repos dans la position de consigne souhaitée.

Si l'utilisateur souhaite tailler une haie dans le sens de la hauteur correspondant à une inclinaison quelconque par rapport à la verticale, il sélectionne tout d'abord la face du cadran comportant deux voyants lumineux. L'utilisateur positionne ensuite le taille-haie dans la position de coupe désirée correspondant à l'inclinaison souhaitée, puis actionne le bouton 36 approprié (noté 36' sur la figure 2) jusqu'à ce qu'aucun des voyants lumineux associés 30 ne soit allumé. L'opération de coupe de la haie peut alors débuter, l'utilisateur s'efforçant de rechercher en permanence l'extinction des voyants lumineux 30 en penchant l'appareil dans le sens opposé au voyant allumé. De cette façon, une coupe de la haie parfaitement régulière selon l'inclinaison souhaitée peut être effectuée.

Le dispositif selon l'invention peut être appliqué à tout appareil portable à usage domestique, et en particulier à un taille-haie portable.

Le dispositif indicateur de position conforme à l'invention permet en conséquence de s'adapter à tout taille-haie existant et de réaliser un travail de taille particulièrement soigné selon toute inclinaison souhaitée.

### POSSIBILITE D'APPLICATION INDUSTRIELLE

L'invention trouve son application industrielle dans la fabrication de dispositif indicateur de position pour appareil portable à usage domestique, du genre taille-haie ou perceuse.

## Revendications

1. Dispositif indicateur de position par rapport à une position de consigne pour appareil portable à usage domestique, ledit dispositif étant apte à être fixé et rendu solidaire de l'appareil, ledit dispositif comprenant un boîtier (1) avec :
- un moyen d'information (20) de la position instantanée de l'appareil susceptible d'émettre des signaux représentatifs de la position instantanée de l'appareil par rapport à la position de consigne,
- un moyen de détermination de la position instantanée de l'appareil relié fonctionnellement au moyen d'information et comportant au moins un logement (10) fermé incluant un élément interne (12) susceptible de se déplacer librement dans le logement (10), sous l'effet de la gravité et en fonction de la position instantanée de l'appareil, entre des positions de butée dans lesquelles l'élément interne ferme (12) un circuit électrique déclenchant, par l'intermédiaire du moyen d'information (20), un signal représentatif de la position instantanée de l'appareil, **caractérise en ce que** ledit logement (10) est monté avec une possibilité de réglage de sa position de manière à permettre de fixer une position de consigne dans laquelle l'élément interne (12) est dans une position stable hors des positions de butées.

2. Dispositif selon la revendication 1 **caractérisé en ce que** le logement (10) est monté mobile en rotation dans le boîtier (1) de manière à permettre le réglage de sa position angulaire pour déterminer et fixer ainsi la position de consigne souhaitée de l'appareil.

3. Dispositif selon la revendication 2 **caractérisé en ce qu'**il comprend deux logements (10) indépendants montés mobiles en rotation autour d'axes (35) orthogonaux entre eux de manière à déterminer et fixer ainsi une position de consigne souhaitée de l'appareil dans les trois dimensions de l'espace.

4. Dispositif selon l'une des revendications 2 ou 3 **caractérisé en ce que** chaque logement (10) est formé par un tube (10a) fermé à ses extrémités, de préférence conducteur électrique, et monté en rotation autour d'un axe normal (35) à son axe longitudinal, chaque tube (10a) comportant, en tant qu'élément interne mobile (12), une bille (12a) en métal conducteur.

5. Dispositif selon l'une des revendications 1 à 4 **caractérisé en ce que** le moyen d'information (20) est un moyen d'information visuel susceptible de fournir des signaux lumineux.

6. Dispositif selon la revendication 5 **caractérisé en ce que** le moyen d'information (20) est formé par un écran (40) pourvu d'une première face avec une série de voyants lumineux (30), chaque voyant (30) étant relié électriquement au circuit électrique associé à chaque position de butée spécifique pour servir de signal lumineux représentatif d'une déviation de position de l'appareil lorsque le circuit électrique correspondant est fermé.

7. Dispositif selon les revendications 2 et 6 **caractérisé en ce que** l'écran (40) est pourvu de deux paires de voyants (30a, 30b, 30c, 30d) sur la première face, chaque paire étant associée à un logement (10), chaque voyant correspondant à une information de déviation par rapport à une position de consigne, définie par rapport à chaque logement (10).

8. Dispositif selon l'une des revendications 6 ou 7 **caractérisé en ce que** l'écran (40) est pourvu d'une seconde face avec une seule paire de voyants associée à un logement (10) de manière à fournir une information de déviation par rapport à une seule position de consigne.

9. Appareil portable à usage domestique équipé d'un dispositif conforme à l'une des revendications 1 à 8.

10. Taille-haie portable équipé d'un dispositif conforme à l'une des revendications 1 à 8.

## Patentansprüche

1. Vorrichtung zur Anzeige der auf einen Referenzstandort bezogenen Position eines tragbaren Haushaltsgerätes, wobei die Vorrichtung an dem Gerät angebracht und unverrückbar befestigt werden kann und ein Gehäuse (1) aufweist mit
- einem Informationsmittel (20) für den augenblicklichen Gerätestandort, welches geeignet ist, Signale über den augenblicklichen Gerätestandort im Verhältnis zum Referenzstandort auszusenden,
- einem Mittel zur Bestimmung des augenblicklichen Gerätestandorts, welches funktionell mit dem Informationsmittel verbunden ist und welches mindestens ein geschlossenes Behältnis (10) mit einem Innenteil (12) aufweist, das geeignet ist, unter Schwerkrafteinwirkung und in Abhängigkeit vom augenblicklichen Standort des Gerätes sich in dem Behältnis (10) zwischen Anschlagspositionen frei zu verschieben, an welchen das Innenteil (12) einen Stromkreis schließt, der mit Hilfe des Informationsmittels (20) ein Signal über den augenblicklichen Standort des Gerätes auslöst, **dadurch gekennzeichnet, dass** das Behältnis (10) derart angebracht ist, dass die Möglichkeit besteht, seine Position so einzustellen, dass ein Referenzstandort festgelegt werden kann, wo das Innenteil (12) eine stabile Position außerhalb der Anschlagspositionen einnimmt.

2. Vorrichtung nach Anspruch 1, **dadurch gekennzeichnet, dass** das Behältnis (10) drehbeweglich im Gehäuse (1) so angebracht ist, dass sich seine Winkelausrichtung einstellen lässt, um so den gewünschten Referenzstandort des Gerätes festzulegen und einzurichten.

3. Vorrichtung nach Anspruch 2, **dadurch gekennzeichnet, dass** sie zwei unabhängige Behältnisse (10) aufweist, welche drehbeweglich um zwei senkrecht aufeinanderstehende Achsen (35) derart angebracht sind, um damit einen gewünschten Referenzstandort des Gerätes in den drei Raumrichtungen festzulegen und einzurichten.

4. Vorrichtung nach einem der Ansprüche 2 oder 3, **dadurch gekennzeichnet, dass** jedes Behältnis (10) aus einem an seinen beiden Enden geschlossenen, vorzugsweise elektrisch leitenden Rohr (10a) gebildet wird und um eine senkrecht auf der Längsachse stehende Achse (35) drehbar angebracht ist, wobei jedes Rohr (10a) als bewegliches Innenteil (12) eine Kugel (12a) aus einem leitenden Metall enthält.

5. Vorrichtung nach einem der Ansprüche 1 bis 4, **dadurch gekennzeichnet, dass** das Informationsmittel (20) ein visuelles Informationsmittel ist, welches Lichtsignale aussenden kann.

6. Vorrichtung nach Anspruch 5, **dadurch gekennzeichnet, dass** das Informationsmittel (20) von einer Blende (40) gebildet wird, die mit einer ersten, eine Reihe von Leuchtanzeigen (30) aufweisenden Seite versehen ist, wobei jede Anzeige elektrisch mit dem Stromkreis verbunden ist, der jeweils einer spezifischen Anschlagsposition zugeordnet ist, um bei geschlossenem Stromkreis ein Lichtsignal für eine Abweichung des Gerätestandorts zu liefern.

7. Vorrichtung nach den Ansprüchen 2 und 6, **dadurch gekennzeichnet, dass** die Blende (40) auf der ersten Seite mit zwei Paaren von Leuchtanzeigen (30a, 30b, 30c, 30d) versehen ist, wobei jedes Paar einem Behältnis (10) zugeordnet ist und jede Leuchtanzeige einer Information über die Abweichung gegenüber einem Referenzstandort entspricht, der nach jedem Behältnis (10) orientiert ist.

8. Vorrichtung nach Anspruch 6 oder 7, **dadurch gekennzeichnet, dass** die Blende (40) mit einer zweiten Seite versehen ist, die nur ein Paar von Leuchtanzeigen aufweist, welche einem Behältnis (10) so zugeordnet sind, dass sie eine Information über die Abweichung von einem einzigen Referenzstandort liefern.

9. Tragbares Haushaltsgerät, ausgestattet mit einer Vorrichtung nach einem der Ansprüche 1 bis 8.

10. Tragbare Heckenschere, ausgestattet mit einer Vorrichtung nach einem der Ansprüche 1 bis 8.

## Claims

1. Device for indicating position with respect to a set position for a portable apparatus for domestic use, the said device being able to be fixed and made integral with the apparatus, the said device comprising a casing (1) with:
- information means (20) on the instantaneous position of the apparatus able to emit signals representing the instantaneous position of the apparatus with respect to the set position,
- a means of determining the instantaneous position of the apparatus functionally connected to the information means and comprising at least one closed housing (10) including an internal element (12) able to move freely in the housing (10) under the effect of gravity and as a function of the instantaneous position of the apparatus, between two stop positions in which the internal element (12) closes an electrical circuit triggering, by means of the information means (20), a signal representing the instantaneous position of the apparatus, **characterised in that** the said housing (10) is mounted with the possibility of adjustment of its position so as to make it possible to fix a set position in which an internal element (12) is in a stable position outside the stop positions.

2. Device according to Claim 1, **characterised in that** the housing (10) is mounted so as to be able to move in rotation in the casing (1) so as to allow the adjustment of its angular position in order thus to determine and fix the required set position of the apparatus.

3. Device according to Claim 2, **characterised in that** it comprises two independent housings (10) mounted so as to be able to move in rotation about spindles (35) orthogonal to each other so as thus to determine and fix a required set position of the apparatus in the three dimensions in space.

4. Device according to one of Claims 2 or 3, **characterised in that** each housing (10) is formed by a tube (10a) which is closed at its ends, preferably electrically conductive, and mounted for rotation about a spindle (35) normal to its longitudinal spindle, each tube (10a) having, as a movable internal element (12), a ball (12a) made from conductive metal.

5. Device according to one of Claims 1 to 4, **characterised in that** the information means (20) is a visual information means able to supply light signals.

6. Device according to Claim 5, **characterised in that** the information means (20) is formed by a screen (40) provided with a first face with a series of indicator lights (30), each light (30) being electrically connected to the electrical circuit associated with each specific stop position in order to serve as a light signal representing a deviation in position of the apparatus when the corresponding electrical circuit is closed.

7. Device according to Claims 2 and 6, **characterised in that** the screen (40) is provided with two pairs of lights (30a, 30b, 30c, 30d) on the first face, each pair being associated with a housing (10), each light corresponding to information on deviation with respect to a set position, defined with respect to each housing (10).

8. Device according to one of Claims 6 or 7, **characterised in that** the screen (40) is provided with a second face with a single pair of lights associated with a housing (10) so as to supply information on deviation with respect to a single set position.

9. Portable apparatus for domestic use equipped with a device according to one of Claims 1 to 8.

10. Portable hedge trimmer equipped with a device according to one of Claims 1 to 8.
